Europäisches Patentamt

European Patent Office

Office européen des brevets

(19)

(11) Veröffentlichungsnummer : **0 047 867**
**B1**

(12) **EUROPÄISCHE PATENTSCHRIFT**

(45) Veröffentlichungstag der Patentschrift :
19.12.84

(21) Anmeldenummer : **81106363.5**

(22) Anmeldetag : **17.08.81**

(51) Int. Cl.³ : **H 02 J 3/46//** B63J3/00

(54) **Schaltungsanordnung zur wirtschaftlichen Ausnutzung von Primär-Energiewandlern.**

(30) Priorität : **15.09.80 DE 3034732**

(43) Veröffentlichungstag der Anmeldung :
**24.03.82 Patentblatt 82/12**

(45) Bekanntmachung des Hinweises auf die Patenterteilung : **19.12.84 Patentblatt 84/51**

(84) Benannte Vertragsstaaten :
**GB NL SE**

(56) Entgegenhaltungen :
DE-A- 1 588 450
DE-A- 1 613 838
DE-A- 2 528 910
DE-B- 1 259 445
FR-A-    743 237
FR-A- 1 245 187
GB-A- 1 282 092

(73) Patentinhaber : **Licentia Patent-Verwaltungs-GmbH**
**Theodor-Stern-Kai 1**
**D-6000 Frankfurt/Main 70 (DE)**

(72) Erfinder : **Kranert, Klaus, Dr.-Ing.**
**Wittenbergener Weg 9**
**D-2000 Hamburg 56 (DE)**
Erfinder : **Steczek, Michael, Dipl.-Ing.**
**Kolbergerstrasse 18**
**D-2057 Reinbek (DE)**
Erfinder : **Knirsch, Hermann, Dipl.-Ing.**
**Am Gehöckel 10**
**D-2000 Hamburg 63 (DE)**

(74) Vertreter : **Sass, Adolph, Dipl.-Ing. et al**
**Licentia Patent-Verwaltungs-GmbH Theo-**
**dor-Stern-Kai 1**
**D-6000 Frankfurt 70 (DE)**

Jouve, 18, rue St-Denis, 75001 Paris, France

**Beschreibung**

Die Erfindung betrifft eine Schaltungsanordnung nach dem Oberbegriff des Anspruches 1.

Es ist üblich, an Bord von Schiffen mehrere Aggregate zur Erzeugung elektrischer Energie nebeneinander zu betreiben, um die zahlreichen Energieverbraucher zu versorgen. So werden für den Fahrantrieb meistens Hauptdieselmotoren und für die an das elektrische Bordnetz angeschlossenen Verbraucher ein von einem kleineren Dieselmotor angetriebener Generator eingesetzt. Durch die allgemeine Energieverknappung und -verteuerung ist der Einsatz von Wellengeneratoren zur Erzeugung elektrischer Energie wieder etwas in den Vordergrund getreten. Bei diesen Anlagen wird meistens ein Synchrongenerator auf die Propellerwelle aufgesetzt oder über ein Getriebe von ihr angetrieben und speist während der Fahrt des Schiffes das Bordnetz. Der eigentliche Bordnetzgenerator läuft dann als Phasenschieber mit und wird nur bei langsam laufendem Schiff und im Hafen voll zur Bordnetzversorgung herangezogen.

Die zu erwartende Energielage zwingt die Schiffbauer und die Reeder zu weitergehenden Energiesparmaßnahmen, um die wirtschaftlichste Energieausnutzung zu erzielen. So ist es beispielsweise bekannt, daß oft größere Energiemengen mit den Abgasen der Hauptantriebs diesel motoren verlorengehen.

Aus der FR-A-743 237 ist eine Anordnung zur Erzeugung und Verteilung elektrischer Energie bekannt, mit der die Gestehungskosten für die Kilowattstunde möglichst niedrig gehalten werden sollen. Wenn Primärenergien unterschiedlicher Art vorhanden sind, soll zunächst diejenige voll genutzt werden, die zu einem günstigsten Abnehmerpreis führt. Beispielsweise sind Wasserkraft-, Dampfkraft-, Speicherkraft- und Wärmekraftwerke genannt, die in Serie geschaltet in ein Verbrauchernetz speisen. Von diesen übernimmt zunächst das Wasserkraftwerk die Leistungslieferung bis zu einer bestimmten Größe, wobei die gelieferte Spannung eine Frequenz von beispielsweise 50 Hz besitzt. Wenn die Verbraucherleistung größer ist als die vom Wasserkraftwerk gelieferte Leistung, fällt die Frequenz auf einen etwas niedrigeren Wert ab, was zur Folge hat, daß ein von einer Dampfkraftmaschine angetriebener Generator an das Netz gelegt wird, der jetzt zusammen mit dem Generator des Wasserkraftwerkes die vom Verbraucher angeforderte Netzleistung mit der kleineren Frequenz von beispielsweise 49,9 Hz liefert. Weitere Generatoren mit ansteigenden Gestehungskosten für die gelieferte Energie werden mit jeweils um bestimmte Beträge abgesenkten Frequenzwerten in das Netz geschaltet bis die Generatorleistung der Verbraucherleistung entspricht. Aus der jeweils gemessenen Frequenz kann erkannt werden, wieviele Generatoren zur Deckung der geforderten Verbraucherleistung in das Netz speisen.

Ferner ist in der DE-C-12 59 445 eine Lastausgleichsregelung beschrieben, bei der mehrere Generatoren auf ein gemeinsames Netz arbeiten. Dabei sollen nur so viele Generatoren mit gleichem Leistungsvermögen eingeschaltet sein, wie der Netzlast entspricht. Bei dieser Regelung werden alle Generatoren auf gleiche Leistung geregelt, von denen einer als Führungsgenerator die Netzfrequenz bestimmt.

Schließlich geht aus der Steuerschaltung nach der DE-C-15 88 450 für die Zu- und Abschaltung mehrerer Leistungserzeuger und Leistungsverbraucher eines Bordnetzes auf Schiffen hervor, daß über Widerstandsschaltungen proportionale Signale der Nennleistungen der Leistungserzeuger und der Leistungsverbraucher gebildet werden, aus denen Summen- und Differenzsignale entstehen. In Abhängigkeit vom Vorzeichen dieser Signale wird entweder die Zuschaltung weiterer Verbraucher freigegeben oder solange gesperrt bis ein weiterer Leistungserzeuger zugeschaltet ist. Mit dieser Steuerschaltung soll eine optimale Ausnutzung der zur Verfügung stehenden Erzeugerleistung überwacht und das Bedienungspersonal entlastet werde.

Der Erfindung liegt daher die Aufgabe zugrunde, eine Schaltungsanordnung zu schaffen, die eine wirtschaftliche Ausnutzung der zur Verfügung stehenden Primärenergie zur Erzeugung elektrischer Energie gewährleistet.

Zur Lösung dieser Aufgabe dienen erfindungsgemäß die im Kennzeichen des Hauptanspruches angegebenen Maßnahmen. Weiterbildungen der Erfindung sind in den Unteransprüchen gekennzeichnet.

Mit der Anordnung nach der Erfindung wird die in den Abgasen des Haupt-Antriebsdiesels noch enthaltene Wärmemenge zum Betrieb eines Turbogenerators so weit als zulässig ausgenutzt. Erst wenn die so gewonnene elektrische Energie nicht mehr ausreicht, um den Netzverbrauch zu decken, wird der nächstgünstige Energieerzeuger zugeschaltet, bis auch dieser am Ende seiner Leistungsfähigkeit ist. Erst dann wird das nicht mehr so günstig arbeitende Dieselaggregat zur Deckung des Bordnetzbedarfes herangezogen.

In der Zeichnung sind Ausführungsbeispiele nach der Erfindung dargestellt und zwar zeigen

Figur 1 ein Schema für den Kreislauf eines Abgas-Turbogenerators,

Figur 2 ein Schaltungsschema für die Regelung mehrerer auf eine Bordnetz-Sammelschiene speisender Aggregate und

Figur 3 eine Schaltungsanordnung zur Bildung des Summen-Leistungs-Sollwertes.

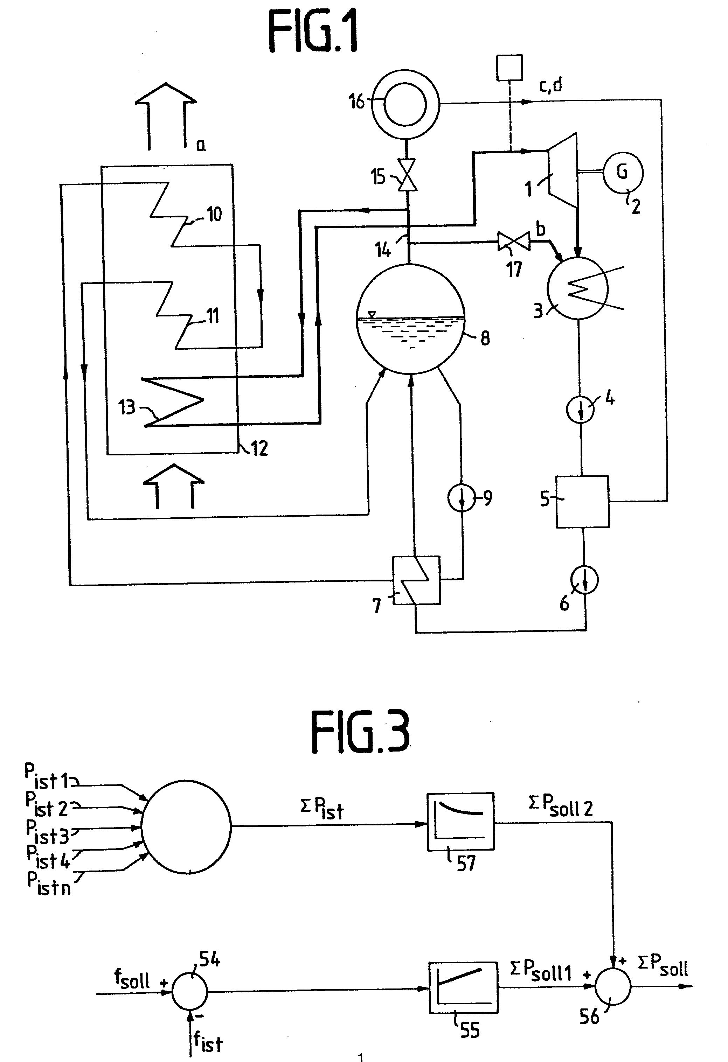

Zunächst soll anhand der Fig. 1 das bekannte Kreislaufschema für einen Abgasturbogenerator besprochen werden, um die zum Verständnis der Erfindung notwendigen Begriffe zu erläutern. Der Dampf, der aus der Turbine 1, welche einen Generator 2 antreibt, kondensiert im Kondensator

3. Über eine Kondensatpumpe 4, einen Speisewassertank 5, eine Speisewasserpumpe 6 und einen Speisewasservorwärmer 7 gelangt der Dampf in die Dampftrommel 8. Eine Umwälzpumpe 9 fördert das Speisewasser aus der Dampftrommel 8 über den Speisewasservorwärmer 7 zu einem Economiser 10 und einen Verdampfer 11 im Abgaskessel 12 zurück zur Dampftrommel 8. Der Abgaskessel wird von den Rauchgasen in Pfeilrichtung durchströmt. Die Vorwärmung des Speisewassers bedeutet eine Abkühlung des Umwälzwassers, welches der Dampftrommel entnommen und zum Abgaskessel gepumpt wird.

Je weiter das Umwälzwasser abgekühlt wird, desto mehr werden auch die Rauchgase bei noch ausreichendem Temperaturunterschied zwischen Wasser und Rauchgas am Austritt des Abgaskessels, die sogenannte Grädigkeit, abgekühlt und umso mehr Energie wird dem Rauchgas entzogen. Die Rauchgastemperatur darf allerdings nicht wesentlich unter 170° sinken, da sich sonst auf den Rohren Kondenswasser bildet und die sogenannte Tauchpunktkorrosion hervorgerufen kann. Wenn die Rauchgase nicht so weit abgekühlt zu werden brauchen, kann der Economiser auch entfallen.

Der Dampf für die Turbine 1 wird im Überhitzer 13, entnommen aus der Dampfleitung 14, erwärmt, um den Turbinenwirkungsgrad anzuheben. Nach der Entspannung in der Turbine strömt der Dampf zum Kondensator und der Kreislauf beginnt von neuem.

Der Dampf für Heizzwecke gelangt über die Dampfleitung 14 und ein Reduzierventil 15 zu den einzelnen Verbrauchern 16. In diesen kondensiert der Dampf unter Wärmeabgabe und kann so zum Speisewassertank zurückgeführt werden.

Eine Dampfüberproduktion des Abgaskessels 12 kann durch einen geregelten Rauchgas-Bypass, Abschaltung von Rohrbündeln oder über ein Überschuß-Regelventil 17 abgeleitet werden. Das Regelventil 17 öffnet bei einer Dampf-Überproduktion eine Bypass-Leitung zwischen der Dampftrommel 8 und dem Kondensator 3. Der Ansprechdruck dieses Ventils liegt über dem Nenndruck der Turbine und unter dem Ansprechdruck des stets vorhandenen Sicherheitsventils. Der Bypass mit dem Regelventil 17 muß für die volle Dampfleistung des Abgaskessels ausgelegt sein.

Das Temperaturniveau des Systems kann auch bei Teillast des Dieselmotors beibehalten werden, wenn die zu produzierende Dampfmenge entsprechend reduziert wird. Bei Teillast des Motors verringert sich hauptsächlich die Rauchgasmenge, die Temperatur der Rauchgase sinkt nur unwesentlich.

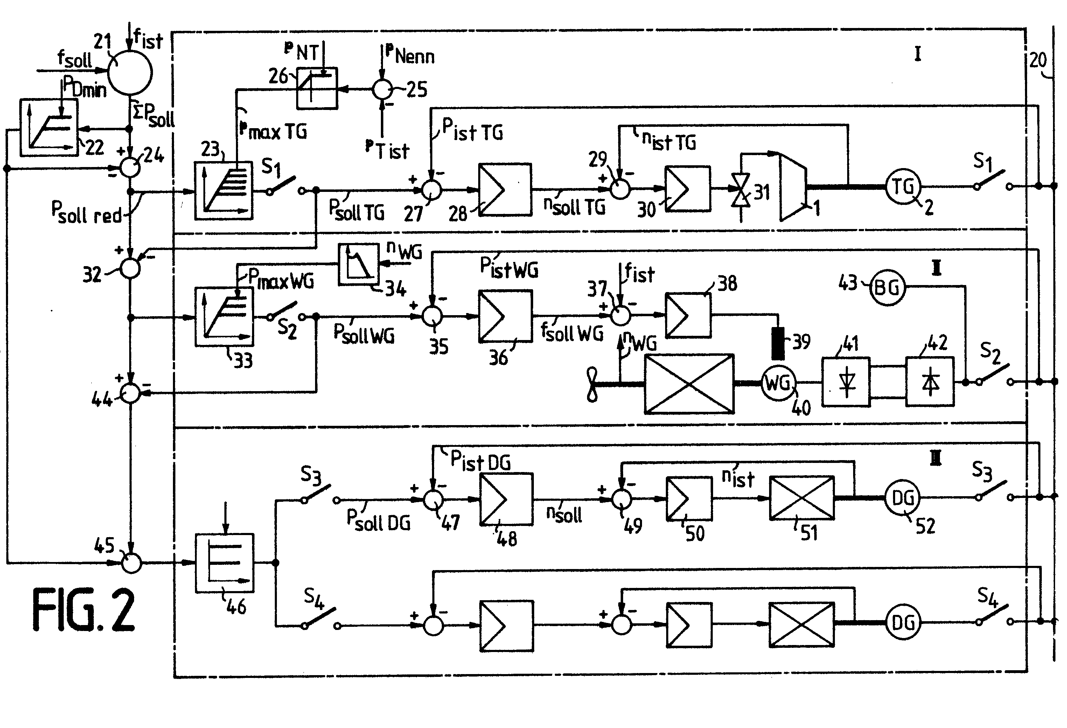

Für die Regelanordnung nach Fig. 2 mehreren in ein Netz speisenden Energieerzeugern, von denen einer ein Abgasturbogenerator ist, ist es von Bedeutung, eine Größe des Dampfkreislaufes auszuwerten, die kennzeichnend für die Ausnutzung der im Abgaskessel produzierten Dampfmenge ist. Bei einem Dampfkreislauf, wie er in Fig. 1 dargestellt ist, bieten sich folgende Größen an :

Abgastemperatur der Rauchgase an der Stelle a.

Wenn die minimale Rauchgastemperatur nicht erreicht ist, könnte der Abgaskessel noch mehr Dampf produzieren. Der Turbogenerator kann die geforderte Last in das Netz liefern.

Stellung des Überschuß-Regelventils an der Stelle b.

Wenn das Regelventil geöffnet hat, wird Energie nutzlos an das Kühlwasser abgegeben. Auch in diesem Fall übernimmt der Turbogenerator allein die Bordnetzversorgung.

Druck oder Temperatur des Dampfkreislaufes an der Stell c/d.

Wenn das Turbinenregelventil weniger Dampf in die Turbine gelangen läßt als der Abgaskessel produziert, so muß der Druck im System ansteigen, bis das Überschuß-Regelventil schließlich öffnet. Je höher der Druck im Dampfsystem ist, desto weniger muß ein weiterer Energieerzeuger zuspeisen.

Da die Druckmessung an der Stelle c exakt, einfach und sicher durchgeführt werden kann, wird sir in der nachfolgenden Beschreibung verwendet.

In der Schaltungsanordnung nach Fig. 2 sind drei mit strichpunktierten Linien umrandete Blöcke I bis III gezeichnet. Der Block I enthält als Energieerzeuger einen Turbogenerator 2, wie er in Fig. 1 an den Abgaskessel angeschlossen ist. Im Block II ist ein Wellengenerator 40 als Energieerzeuger und in Block III Dieselgeneratoren 52 vorgesehen. Diese Energieerzeuger sind einzeln oder gemeinsam in der Lage, den Energiebedarf der an eine Bordnetzsammelschiene 20 angeschlossenen Verbraucher zu decken. Da der Abgasturbogenerator die billigste Energie aus den Rauchgasen des Hauptantriebs-Dieselmotors erzeugen kann, wird er zunächst zur Energiedeckung herangezogen.

Die drei Energieerzeuger sind mit ihren Regelgliedern an eine übergeordnete Frequenzregelung 21 angeschlossen, die dafür sorgt, daß bei einer schwankenden Netzleistung eine konstante Netzfrequenz gewährleistet ist. Bei Verwendung von Dieselaggregaten wie in Block III, ist es zunächst erforderlich, den Gesamtleistungsbedarf $\Sigma P_{soll}$ um einen Minimalwert $P_{Dmin}$ im Block 22 zu reduzieren. Bekanntlich dürfen Dieselmotoren nicht lange im Leerlauf betrieben werden, da sonst die Ventile verkoken. Der so reduzierte Wert für den Gesamtleistungsbedarf $\Sigma P_{sollred}$ steht am Block 23 im Teil I an.

Wenn die verwendete Turbine für einen Nenndruck von 7,5 bar ausgelegt ist, d. h. bei diesem Druck und bei voll geöffnetem Regelventil Nennleistung abgibt, kann diese Größe als Sollwert für die Regelung herangezogen werden. An einer Vergleichsstelle 25 können daher der Nenndruck $P_{nenn}$ und der Ist-Druck $P_{Tist}$ vor der Turbine anstehen. Durch diese Differenzbildung ergibt sich die maximale von der Abgasturbine erzeugbare Leistung $P_{maxTG}$, die durch einen Begrenzer 26 begrenzt ist. Die maximal von der Turbine abgebbare Leistung und die aus dem Baustein 24 ausgegebene reduzierte Gesamtleistung bilden im Block 23 den Leistungssollwert $P_{sollTG}$ für die Turbine. Nach Schließen des Schalters $S_1$ wird der Sollwert mit dem Momentanwert des Turbogenerators $P_{IstTG}$ in der Vergleichsstelle 27 verglichen und im Regler 28 die Abweichung ausgeregelt. Das aus dem Regler 28 ausgegebene Signal steht als Drehzahl-Sollwert $n_{sollTG}$ im Vergleicher 29 und wird dort mit dem Istwert der Drehzahl an dem Turbogenerator verglichen. Eine Drehzahlabweichung wird über den Regler 30 als Stellglied an ein Turbinenregelventil 31 weitergegeben. Wenn die angeforderte Bordnetzleistung von der Abgasturbine abgedeckt werden kann, wird allen anderen Aggregaten der Leistungssollwert $P_{soll}$ = Null vorgegeben. Durch den Anlagenteil I wird die gesamte im Abdampfkessel erzeugte Dampfmenge voll ausgenutzt.

Wenn der Turbogenerator 1, 2 nicht in der Lage ist, die vom Bordnetz angeforderte Leistung zu erbringen, so muß ein weiterer Anlagenteil II mit einem Wellengenerator zugeschaltet werden. Der vom Wellengenerator aufzubringende Leistungsanteil wird in der Vergleichsstelle 32 aus dem reduzierten Gesamtleistungsbedarf $\Sigma P_{sollred}$ und dem Leistungssollwert $P_{sollTG}$ ermittelt. Dieser Wert steht am Block 33 an, in den auch die maximal vom Wellengenerator erzeugbare Leistung $P_{maxWG}$ eingeht. Diese Leistung kann die Nennleistung des Wellengenerators sein oder aus dem Produkt der Wellendrehzahl $n_{WG}$ und der Nennleistung ermittelt werden. Im Block 34 wird dieses Produkt gebildet. Nach Schließen der Schalter $S_2$ wird aus dem Block 33 ein Leistungssollwert $P_{sollWG}$ einer Vergleichsstelle 35 zugeführt und mit dem Istwert $P_{IstWG}$ verglichen. In einem Block 36 wird eine mögliche Abweichung ausgeregelt, dessen Ausgangssignal den Sollwert für eine unterlagerte Frequenzregelung in den Blöcken 37 und 38 bildet. Über den Regler 38 wird die Erregerwicklung 39 des Wellengenerators 40 im Sinne einer konstanten Netzfrequenz beeinflußt. Der Wellengenerator 40 liefert über einen ungesteuerten Gleichrichter 41 und einen netzgeführten Wechselrichter 42 seinen Leistungsanteil in das Bordnetz 20. Ein Bordnetzgenerator 43 läuft im Wellengeneratorbetrieb als Phasenschieber.

Sollte die von den Anlagenteilen I und II erbrachte Leistung noch nicht ausreichen, um die vom Netz angeforderte Leistung abzudecken, wird es notwendig sein, einen weiteren Anlagenteil III, im vorliegenden Fall weniger wirtschaftlich arbeitende Dieselgeneratoren zuzuschalten. Der von einem oder mehreren Dieselgeneratoren aufzubringende Leistungsanteil wird wiederum in der Vergleichsstelle 44 aus der reduzierten Gesamtleistung $\Sigma P_{sollred}$ abzüglich der Solleistung $P_{sollTG}$ und der Solleistung $P_{sollWG}$ ermittelt. Zu diesem Wert wird in der Summationsstelle 45 der in Block 22 ermittelte Minimalwert $P_{Dmin}$ hinzuaddiert. In Block 46 wird berücksichtigt, ob ein oder beide im Anlagenteil III vorgesehene Dieselgeneratoren einzuschalten sind. Bei Betätigung des Schalters $S_3$ wird das Ausgangssignal von 46 als Sollwert $P_{sollDG}$ auf die Vergleichsstelle 47 gegeben. Nach Vergleich mit dem Momentanwert der Leistung $P_{IstDG}$ wird die Abweichung im Block 48 ausgeregelt und als Drehzahlsollwert $n_{sollDG}$ auf die Vergleichsstelle 49 geführt. Eine Abweichung nach Vergleich mit dem Drehzahlistwert $n_{istDG}$ wird im Reder 50 ausgeregelt und als Signal zur Änderung der Füllungsvorgabe im Dieselmotor 51 weitergeleitet. Der von dem Motor 51 angetriebene Generator 52 liefert dann die noch fehlende Leistung in das Netz 20. Gegebenenfalls ist auch noch die Einschaltung des weiteren Dieselaggregates durch Schließen der Schalter $S_4$ notwendig.

In Fig. 3 ist die übergeordnete Frequenzregelung zur Gewährleistung einer konstanten Netzfrequenz bei schwankender Netzleistung noch einmal dargestellt. In der Vergleichsstelle 54, die der Vergleichsstelle 21 in Fig. 2 entspricht, wird die Istfrequenz $f_{ist}$ von der Sollfrequenz $f_{soll}$ subtrahiert. Die Abweichung wird auf einen PI-Regler 55 gegeben, der das Summensignal $\Sigma P_{soll_1}$ ausgibt. Diesem Sollwert wird im Addierer 56 ein weiterer Sollwert $\Sigma P_{soll_2}$ hinzuaddiert, der aus der Summe der Istleistungen $\Sigma P_{ist}$ gebildet ist und durch eine $PD_{T1}$-Strecke 57 verstärkt wird. Der von dem Addierer 56 ausgegebene Summensollwert $\Sigma P_{soll}$ steht an den Vergleichsstellen nach Fig. 2 an.

Wenn in dem Ausführungsbeispiel eine Gesamtanlage, bestehend aus Turbogenerator, Wellengenerator und Dieselgeneratoren beschrieben worden ist, so ist hierauf die Erfindung nicht beschränkt. Vielmehr ist bei einer aus beliebigen Primär-Energiewandlern augfebaute Anlage dem Energiewandler mit der wirtschaftlichsten Energieausnutzung eine Leitfunktion zugeordnet, derart, daß die zur Verfügung stehende Energie so weit wie möglich zulässig ausgenutzt wird, bevor ein weiterer Energiewandler zur Deckung des geforderten Leistungsbedarfes eingeschaltet wird.

**Ansprüche**

1. Schaltungsanordnung zur wirtschaftlichen Ausnutzung von Primärenergiewandlern, die, mit unterschiedlicher Primärenergie gespeist, elektrische Generatoren (2, 40, 52) antreiben, welche parallel in ein im Inselbetrieb arbeitendes Netz (20) mit schwankendem Energieverbrauch speisen, wobei die Leistungsregler (27, 28, 35, 36, 47, 48) der Primärenergiewandler (1, 51) an eine übergeordnete Frequenzregelung (21) angeschlossen sind wobei das Aggregat mit der wirtschaftlichsten Primärenergiewandlung als Leitaggregat arbeitet und das Leitaggregat erst durch das nächste Aggregat entlastet wird, wenn die geforderte Netzleistung ($\Sigma P_{soll}$) die vom Leitaggregate momentan maximal verfügbare Leistung überschreitet, dadurch gekennzeichnet, daß erst nach Vollauslastung des Leitaggregates über eine Differenzbildung (32) aus der geforderten Netzleistung ($\Sigma P_{soll}$) und der vom Leitaggregat momentan maximal verfügbaren Leistung ein Sollwert für die Leistungsregelung (35, 36) eines nächsten Aggregates gebildet und diesem aufgeschaltet wird, daß weitere Aggregate zum Einsatz gelangen, wenn die aus den parallellaufenden Aggregaten zur Verfügung gestellte Leistung die geforderte Netzleistung ($\Sigma P_{soll}$) unterschreitet, und daß einem nur mitlaufenden Dieselmotor (51) als Primärenergiewandler stets eine Minimalleistung ($P_{Dmin}$) als Soll-Leistung zugeführt wird, um die die geforderte Netzleistung ($\Sigma P_{soll}$) vorher reduziert wird.

2. Anordnung nach Anspruch 1, dadurch gekennzeichnet, daß dem Summenleistungs-Sollwert ($\Sigma P_{soll_1}$) aus einem Frequenzregler (54) ein von einem Summen Leistungs-Istwert ($\Sigma P_{Ist}$) abhängiger Wert ($\Sigma P_{soll_2}$) mit einem Proportional- und einem Vorhalteanteil (PD) aufgeschattet wird.

3. Anordnung nach Anspruch 1, dadurch gekennzeichnet, daß als Leitaggregat ein von einem Abgaskessel (12) gespeister Turbogenerator (1, 2) arbeitet, zu dem ein Wellengenerator (40) parallel geschaltet ist.

4. Anordnung nach Anspruch 1, dadurch gekennzeichnet, daß als Leitaggregat ein von einem Abgaskessel (12) gespeister Turbogenerator (2) arbeitet, zu dem ein Dieselaggregat (52) parallel geschaltet ist.

5. Anordnung nach Anspruch 3 oder 4, dadurch gekennzeichnet, daß als verfügbare Leistung des Turbogenerators (1, 2) der momentane Druck ($p_{TIst}$) oder die Temperatur des Dampfes vor einem Drosselventil oder des Abgaskessels (12) dient, welche mit dem Nennwert des Druckes ($P_{Nenn}$) oder der Temperatur verglichen wird, und daß die Differenz als Sollwert ($P_{sollTG}$) der Leistungsregelung der parallelliegenden Aggregate zugeführt wird.

6. Anordnung nach Anspruch 3 oder 4, dadurch gekennzeichnet, daß als zusätzlicher Sollwert für die Leistungsregelung die Differenz der Abgastemperatur am Abgaskesselaustritt (a) und der Temperaturwert der Taupunktgrenze dient.

7. Anordnung nach Anspruch 3 oder 4, dadurch gekennzeichnet, daß der zusätzliche Sollwert für die Leistungsregelung aus der Stellung eines Überschußventils (17) gewonnen wird.

8. Anordnung nach Anspruch 3 oder 4, dadurch gekennzeichnet, daß der zusätzliche Sollwert bei Vorhandensein eines Rauchgas-Bypasses aus der darin gemessenen Rauchgasmenge gewonnen wird.

9. Anordnung nach Anspruch 1, dadurch gekennzeichnet, daß bei Verwendung eines Wellengenerators (40) einer Antriebsmaschine als Leitaggraget die verfügbare Leistung aus der Wellendrehzahl ($n_{WG}$) ermittelt und zu Regelzwecken die Differenz mit der erzeugten Leistung gebildet wird.

10. Anordnung nach Anspruch 5 oder 6, dadurch gekennzeichnet, daß die Differenz, multipliziert mit der momentanen Turbinenleistung des Turbogenerators zusätzlicher Sollwert für die Leistungsregelung von Wellengenerator (40) bzw. Dieselaggregat (51) dient.

**Claims**

1. A circuit arrangement for the economical utilization of primary energy converters which, fed with different primary energy, drive electric generators (2, 40, 52) which feed in parallel into a power supply (20) working in island operation with fluctuating power consumption, the output regulators (27, 28, 35, 36, 47, 48) of the primary energy converters (1, 51) being connected to an overriding frequency control (21), the generating set with the most economical primary energy conversion working as the leading generating set and the leading generating set only being relieved by the next generating set when the power supply output ($\Sigma P_{soll}$) required exceed the instantaneous maximum available output from the leading generating set, characterised in that only after the leading generating set is working to full capacity is a desired value for the output control (35, 36) of the next generating set formed by finding the difference (32) between the required power supply output ($\Sigma P_{soll}$) and the instantaneous maximum available output from the leading generating set, and applied to this next generating set, that further generating sets come into use if the output made available from the generating sets runnings in parallel drops below the required power supply output ($\Sigma P_{soll}$), and that a minimum output ($P_{Dmin}$) is always supplied, as a desired output, to a diesel engine (51) which only runs simultaneously as a primary energy converter, by which desired output the required power supply output ($\Sigma P_{soll}$) is previously reduced.

2. An arrangement as claimed in Claim 1, characterised in that a value ($\Sigma P_{soll_2}$) depending on a total output actual value ($\Sigma P_{Ist}$) is superimposed, with a proportional and a derivative component (PD), on the total output desired value ($\Sigma P_{soll_1}$) from a frequency control (54).

3. An arrangement as claimed in Claim 1, characterised in that a turbogenerator (1, 2) fed from a waste-heat boiler (12) works as the leading generator set with which a main-shaft mounted generator (4) is connected in parallel.

4. An arrangement as claimed in Claim 1, characterised in that a turbogenerator (2) which is fed from a waste-heat boiler (12) works as the leading generator set with which a diesel-driven generating set (52) is connected in parallel.

5. An arrangement as claimed in Claim 3 or 4, characterised in that the instantaneous pressure

($P_{Tist}$) or the temperature of the steam in front of a throttle valve or of the waste-heat boiler (12) serves as available output of the turbogenerator (1, 2) and is compared with the nominal value of the pressure ($P_{Nenn}$) or of the temperature and that the difference is supplied as a desired value ($P_{sollTG}$) to the output control of the generating sets connected in parallel.

6. An arrangement as claimed in Claim 3 or 4, characterized in that the difference between the wastegas temperature at the outlet (a) of the waste-heat boiler and the temperature value of the dew point limit serves as an additional desired value for the output control.

7. An arrangement as claimed in Claim 3 or 4, characterised in that the additional desired value for the output control is obtained from the position of an excess valve (17).

8. An arrangement as claimed in Claim 3 or 4, characterised in that when a flue-gas by-pass is present, the additional desired value is obtained from the amount of flue-gas measured therein.

9. An arrangement as claimed in Claim 1, characterized in that, when a main-shaft mounted generator (40) of a prime mover is used as the leading generator set, the available output is determined from the speed of rotation ($n_{WG}$) of the shaft and the difference is formed with the power produced, for control purposes.

10. An arrangement as claimed in Claim 5 or 6, characterised in that the difference, multiplied by the instantaneous turbine output of the turbogenerator, serves as an additional desired value for the output control of main-shaft mounted generator (40) or diesel-driven generating set (51).

### Revendications

1. Dispositif de commutation pour utilisation économique des convertisseurs d'énergie primaire, alimentés par différentes énergies primaires et qui entraînent des générateurs électriques (2, 40, 52), qui débitent en parallèle dans un réseau (20) fonctionnant isolément avec une consommation d'énergie variable, les régulateurs de puissance (27, 28, 35, 36, 47, 48) des convertisseurs d'énergie primaire (1, 51) étant raccordés à une régulation de fréquence (21) surimposée, le groupe fonctionnant comme groupe-pilote pour la conversion la plus économique possible de l'énergie primaire et le groupe-pilote n'étant délesté par le groupe suivant qu'au moment où la puissance exigée par le réseau ($\Sigma P_{soll}$) dépasse la puissance momentanément disponible du groupe-pilote, caractérisé en ce que, seulement après délestage complet du groupe pilote, une valeur de consigne pour la régulation de puissance (35, 36) d'un groupe voisin est obtenue par la formation d'une différence (32) entre la puissance exigée par le réseau ($\Sigma P_{soll}$) et la puissance maximale momentanément disponible au groupe-pilote et cette valeur de consigne est appliquée au groupe voisin précité, en ce que d'autres groupes entrent en fonctionnement lorsque la puissance disponible provenant des groupes fonctionnant en parallèle devient inférieure à la puissance exigée par le réseau ($\Sigma P_{soll}$) et en ce qu'une puissance minimale ($P_{Dmin}$) est appliquée en permanence uniquement à un moteur diesel (51) fonctionnant simultanément comme convertisseur d'énergie primaire afin de réduire d'avance la puissance exigée par le réseau ($\Sigma P_{soll}$).

2. Dispositif selon la revendication 1, caractérisé en ce qu'une valeur ($\Sigma P_{soll_2}$) dépendant de la valeur effective ($\Sigma P_{ist}$) de la puissance totale est appliquée à la valeur de consigne ($P_{soll_1}$) de la puissance totale provenant d'un régulateur de fréquence (54) avec une partie proportionnelle et une partie permanente (PD).

3. Dipositif selon la revendication 1, caractérisé en ce qu'un turbo-alternateur (1, 2), alimenté par une chaudière à gaz d'échappement (12) fonctionne comme groupe pilote, auquel un générateur monté sur l'arbre (40) est raccordé en parallèle.

4. Dispositif selon la revendication 1, caractérisé en ce qu'un turbo-alternateur (2), alimenté par une chaudière à gaz d'échappement (12) fonctionne comme groupe pilote, auquel un groupe diesel (52) est raccordé en parallèle.

5. Dispositif selon les revendications 3 ou 4, caractérisé en ce que la puissance disponible du turbo-alternateur (1, 2) est déterminée par la pression momentanée ($P_{Tist}$) ou par la température de la vapeur avant une vanne de réglage ou de la chaudière à gaz d'échappement (12), cette valeur étant comparée à la valeur nominale de la pression ($P_{Nenn}$) ou de la température et en ce que la différence est appliquée comme valeur de consigne ($P_{sollTG}$) à la régulation de puissance des groupes disposés en parallèle.

6. Dispositif selon les revendications 3 ou 4, caractérisé en ce que la différence entre la température des gaz d'échappement à la sortie de la chaudière à gaz d'échappement (a) et la température du point de rosée sert de valeur de consigne supplémentaire pour la régulation de puissance.

7. Dispositif selon les revendications 3 ou 4, caractérisé en ce que la valeur de consigne supplémentaire pour la régulation de puissance provient de la position d'une vanne de trop plein (17).

8. Dispositif selon les revendications 3 ou 4, caractérisé en ce que la valeur de consigne supplémentaire provient, s'il existe un by-pass pour les gaz de fumées, du débit de gaz de fumées qui y est mesuré.

9. Dispositif selon la revendication 1, caractérisé en ce que, en cas d'utilisation d'un générateur monté sur l'arbre (40) d'une machine d'entraînement comme groupe pilote, la puissance disponible est déterminée d'après la vitesse de rotation de l'arbre ($n_{WG}$) et que la différence par rapport à la puissance produite est déterminée à des fins de régulations.

10. Dispositif selon les revendications 5 ou 6, caractérisé en ce que la différence, multipliée par la puissance momentanée de la turbine du turbo-alternateur, sert de valeur de consigne supplémentaire pour la régulation de puissance du générateur monté sur l'arbre (40) ou du groupe diesel (51).

0 047 867

# FIG.1

# FIG.3

FIG.2